# EUROPEAN PATENT SPECIFICATION

(11) **EP 4 256 453 B1**
(45) Date of publication and mention of the grant of the patent: **17.07.2024**
(21) Application number: 21823847.5
(22) Date of filing: 01.12.2021
(51) Int. Cl.: G06F 21/62, G06N 3/08, G06N 3/04

(54) **PROVIDING TRAINING DATA FOR A MACHINE LEARNING MODEL FOR MONITORING A PERSON BASED ON VIDEO DATA**
BEREITSTELLUNG VON TRAININGSDATEN FÜR EIN MASCHINELLES LERNENMODELL ZUR ÜBERWACHUNG EINER PERSON AUF BASIS VON VIDEODATEN
FOURNITURE DE DONNÉES D'ENTRAINEMENT POUR UN MODÈLE D'APPRENTISSAGE MACHINE POUR LA SURVEILLANCE D'UNE PERSONNE SUR LA BASE DE DONNÉES VIDEO

(30) Priority: 01.12.2020 SE 2051402
(43) Date of publication of application: 11.10.2023
(73) Proprietor: ASSA ABLOY AB, 107 23 Stockholm (SE)
(72) Inventor: RYD, Gustav, 112 39 Stockholm (SE); CRASTO, Nieves, 124 58 Bandhagen (SE)
(74) Representative: Kransell & Wennborg KB
(86) International application number: PCT/EP2021/083693
(87) International publication number: WO 2022/117610

(56) References cited:
- US-A1- 2020 349 347
- US-B2- 10 535 120
- ALEKSEI TRIASTCYN ET AL: "Generating Artificial Data for Private Deep Learning", ARXIV:1803.03148V2, 7 June 2018 (2018-06-07), XP055644533, Retrieved from the Internet <URL:https://arxiv.org/pdf/1803.03148v2.pdf> [retrieved on 20191120]
- BLAZ; MEDEN ET AL: "k-Same-Net: k-Anonymity with Generative Deep Neural Networks for Face Deidentification", ENTROPY, vol. 20, no. 1, 13 January 2018 (2018-01-13), pages 60, XP055730554, DOI: 10.3390/e20010060

## Description

### TECHNICAL FIELD

The present disclosure relates to the field of providing training data for a machine learning (ML) model, and in particular to providing training data for an ML model for monitoring a person based on video data.

### BACKGROUND

New technology opens up new opportunities. For instance, the evolution of digital cameras and communication technologies enable monitoring of people to be provided using video surveillance at relatively low cost. This can be particularly useful for elderly people or disabled people, who in this way can enjoy greatly improved quality of life by living in their own home instead of being in a staffed care facility.

Video surveillance is certainly useful, but privacy issues arise. Hardly anyone enjoys being continuously monitored using video surveillance, for monitoring of when the person needs help.

One way to reduce the privacy concern is to, instead of manual monitoring, use machine learning models to determine the events that affects the state of a person. However, machine learning models need to be trained, which requires video data to be provided to the machine learning model. Such video data for training sometimes needs to be manually processed as part of the training process, which is a privacy concern for the person captured in the video data.

US 2020/349347A1 discloses a monitoring and analysis system which can display the movements of a person to be monitored using stick figures and without revealing the pictures or the identity of the person. The stick figures can be analysed to detect an unusual or potentially dangerous activity undertaken by the person.

XP055644533, titled "Generating Artificial Data for Private Deep Learning" from Aleksei Triastcyn ET AL, discloses the use of Generative adversarial networks (GANs) to create artificial datasets to be used in place of real data for training.

### SUMMARY

One object is to provide training data that does not compromise privacy of the person for which data is captured for the training data.

According to a first aspect, it is provided a method for providing training data for a machine learning model for monitoring a person based on video data. The method is performed by a training data provider. The method comprises: obtaining a data feed of the person, wherein the data feed comprises a series of images that preserves a privacy of the person; generating fake video data of a fictive person, such that a face of the fake video data is a computer-generated fictive face; combining the data feed with the fake video data, resulting in training data; and providing the training data for training the machine learning model.

The data feed may have been captured using a privacy preserving capturing device.

The privacy preserving capturing device may be a radar.

The privacy preserving capturing device may be an infrared (IR) camera with a resolution that is low enough to not reveal a face of the person.

The step of generating fake video data may comprise generating fake video data based on a generative adversarial network, GAN.

According to a second aspect, it is provided a training data provider for providing training data for a machine learning model for monitoring a person based on video data. The training data provider comprises: a processor; and a memory storing instructions that, when executed by the processor, cause the training data provider to: obtain a data feed of the person, wherein the data feed comprises a series of images that preserves a privacy of the person; generate fake video data of a fictive person, such that a face of the fake video data is a computer-generated fictive face; combine the data feed with the fake video data, resulting in training data; and provide the training data for training the machine learning model.

The data feed may have been captured using a privacy preserving capturing device.

The privacy preserving capturing device may be a radar.

The privacy preserving capturing device may be an infrared (IR) camera with a resolution that is low enough to not reveal a face of the person.

The step of generating fake video data may comprise generating fake video data based on a generative adversarial network, GAN.

According to a third aspect, it is provided a computer program for providing training data for a machine learning model for monitoring a person based on video data. The computer program comprises computer program code which, when executed on a training data provider causes the training data provider to: obtain a data feed of the person, wherein the data feed comprises a series of images that preserves a privacy of the person; generate fake video data of a fictive person, such that a face of the fake video data is a computer-generated fictive face; combine the data feed with the fake video data, resulting in training data; and provide the training data for training the machine learning model.

According to a fourth aspect, it is provided a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Figs 2A-C are schematic diagrams illustrating embodiments of where the training data provider can be implemented;
Fig 3 is a flow chart illustrating embodiments of methods for providing training data for a machine learning model for monitoring a person based on video data;
Fig 4 is a schematic diagram illustrating components of the training data provider of Fig 1; and
Fig 5 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, training data is generated by combining a data feed of a monitored person, that preserves privacy of the monitored person, with generated fake video data depicting a fictive person. In this way, the training data contains valuable real aspects that are captured of the monitored person, such as posture, position, etc, but the privacy of the monitored person is preserved. By including the generated fake video data of the fictive person, the training data looks like a real video feed, which improves the training of a machine learning (ML) model for inferring states of the monitored person when, during execution of the ML model, the ML model infers states based on video data. Hence, useful and valuable training data is provided that still preserves privacy of the monitored person.

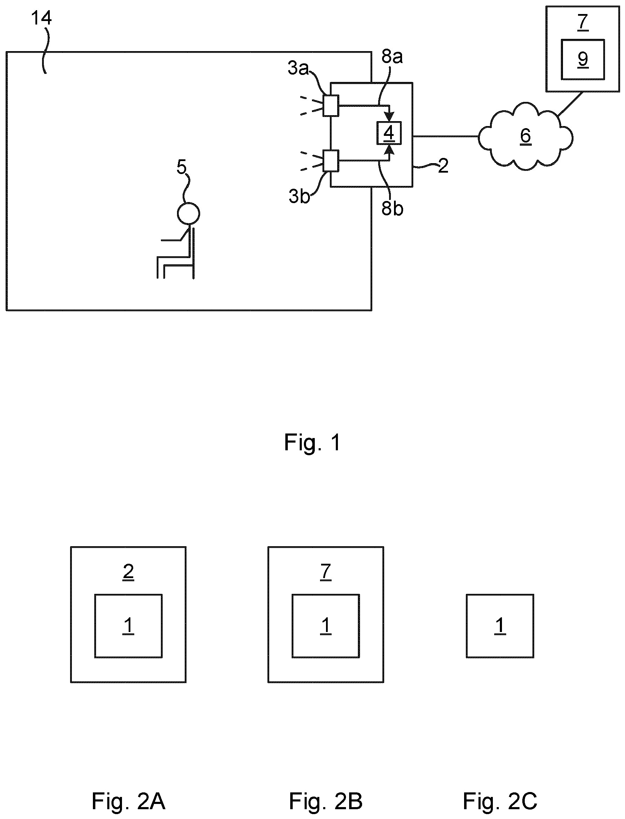

Fig 1 is a schematic diagram illustrating an environment in which embodiments presented herein can be applied. A person 5 to be monitored is at least part of the time present in a physical space 14. The physical space 14 can e.g. be a room, a flat, a house, an office etc. A monitoring device 2 is configured to monitor the person 5 based on at least a privacy preserving capturing device 3a and a camera 3b. The monitoring device is also used for capturing data of the person 5 for purposes of training an ML model. The privacy preserving capturing device 3a provides a first data feed 8a of the person. The first data feed 8a is such that a privacy of the person is preserved. This implies e.g. that the face of the person is not part of the first data feed, at least not to a degree that the person can be identified. For instance, the privacy preserving capturing device 3a can be implemented as an infrared (IR) camera with a resolution that is low enough to not reveal a face of the person. Alternatively, the privacy preserving capturing device 3a can be implemented as a radar or any other suitable imaging technology that preserves the privacy of the person 5.

In addition, the camera 3b provides a second data feed 8b for use in an ML model. The second data feed 8b does not need to be used for training the ML model. In one embodiment, the second data feed 8b from the camera 3b is not used at all for training the ML model. Additional sensors (not shown) can also be provided, providing respective data feeds.

The monitoring device 2 can contain a local ML model 4. There may be one or more monitoring devices 2 working in parallel on the same or complementing scene. The monitoring device 2 can be connected to a network 6, which can be an Internet protocol (IP) based network. The network 6 can e.g. comprise any one or more of a local wireless network, a cellular network, a wired local area network, a wide area network (such as the Internet), etc. Optionally, a central ML device 7, containing a central ML model 9, is also connected to the network 6.

The central ML device 7 can then be used in cooperation with a plurality of separate monitoring devices 2 with respective local ML models 4, e.g. as part of a federated ML model. Alternatively, only a single ML model is provided, either as a central ML model 9 or a local ML model 4.

The monitoring device 2 and/or the central ML device 7 are used to infer results based on the data feeds 8a, 8b. Specifically, the monitoring device 2 and/or the central ML device 7 is used to infer a monitored state of the person 5. Non-limiting examples of states, all relating to the person, are: absent, present, lying in bed, lying on floor, breathing, distress, etc.

Figs 2A-C are schematic diagrams illustrating embodiments of where the training data provider 1 can be implemented.

In Fig 2A, the training data provider 1 shown implemented in the monitoring device 2. The monitoring device 2 is thus the host device for the training data provider 1 in this implementation. In this case, the training data is thus obtained locally, at the site of the local ML model 4.

In Fig 2B, the training data provider 1 shown implemented in the central ML device 7. The central ML device 7 is thus the host device for the training data provider 1 in this implementation. In this case, the training data is thus obtained centrally, at the site of the central ML model 9.

In Fig 2C, the training data provider 1 is shown implemented as a stand-alone device. The training data provider 1 thus does not have a host device in this implementation. The training data provider 1 can then be located in any suitable location, as long as it can communicate with an ML model for training and with the monitoring device 2 for obtaining sound-based data.

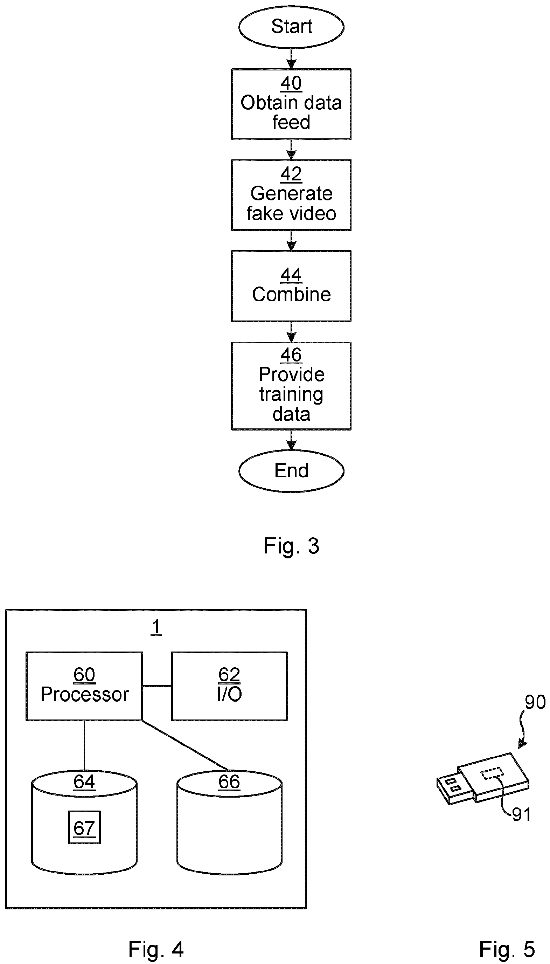

Fig 3 is a flow chart illustrating embodiments of methods for providing training data for a machine learning model for monitoring a person based on video data. The method is performed by a training data provider 1.

In an *obtain data feed* step 40, the training data provider 1 obtains a data feed of the person, wherein the data feed is such that a privacy of the person is preserved. The data feed comprises a series of images and can also be expressed to be a video feed. The data feed has been captured using a privacy preserving capturing device 3a. The data feed covers a certain time period, i.e. the data feed is not only a capture of an instant in time. The privacy preserving capturing device 3a can be a radar or an infrared, IR, camera with a resolution that is low enough to not reveal a face of the person. The data feed can contain the posture of the person. The data feed can contain the position of the person in the physical space. The data feed is a series of images, i.e. a video feed, where the face of a captured person is not distinguishable.

In a *generate fake video* step 42, the training data provider 1 generates fake video data of a fictive person, such that a face of the fake video data is a computer-generated fictive face (and is thus not based on the person of the data feed obtained in step 40). This generation can comprise generating fake video data based on a generative adversarial network (GAN). The fake video can be generated to fit with the data feed, i.e. to fit with the posture and position of the person, indicated in the data feed. The fake video is also a series of images that can be combines with the series of images of the data feed of the obtain data feed step 40.

In a *combine* step 44, the training data provider 1 combines the data feed (i.e. the video feed obtained in step 40) with the fake video data, resulting in training data. The resulting training data is in the form of a video stream. Each image of the resulting video stream, where a face is depicted, thus contains the computer-generated fictive face from the fake video and image data from the data feed obtained instep 40. For each image, the combining can be performed based on an image from the data feed where a face from the generated video data is provided in an appropriate location in relation to a body depicted in the data feed.

In a *provide training data* step 46, the training data provider 1 provides the training data (in the form of a video stream) for training the ML model, e.g. a local and/or a central ML model.

The training data can be labelled, where each label in the training data indicates a correct classification. The labelling can be manual or automatic, based e.g. on another ML model or on another state detection mechanism.

The method can be performed in real-time or it can be performed based on a stored, previously captured, data feed.

Using embodiments presented herein, useful and valuable training data in video form is provided for training an ML model, where the training data preserves the privacy of the person being the source of the training data.

Fig 4 is a schematic diagram illustrating components of the training data provider 1 of Figs 2A-C. It is to be noted that, when the training data provider 1 is implemented in a host device (see Figs 2A-B and corresponding text above), one or more of the mentioned components can be shared with the host device. A processor 60 is provided using any combination of one or more of a suitable central processing unit (CPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 3 above.

The memory 64 can be any combination of random-access memory (RAM) and/or read-only memory (ROM). The memory 64 also comprises persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The training data provider 1 further comprises an I/O interface 62 for communicating with external and/or internal entities. For instance, the I/O interface 62 allows the training data provider 1 to communicate the network 6. Optionally, the I/O interface 62 also includes a user interface.

Other components of the training data provider 1 are omitted in order not to obscure the concepts presented herein.

Fig 5 shows one example of a computer program product 90 comprising computer readable means. On this computer readable means, a computer program 91 can be stored, which computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 4. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for providing training data for a machine learning model for monitoring a person based on video data, the method being performed by a training data provider (1), the method comprising:
obtaining (40) a data feed of the person, wherein the data feed comprises a series of images that preserves a privacy of the person;
generating (42) fake video data of a fictive person, such that a face of the fake video data is a computer-generated fictive face ;
combining (44) the data feed with the fake video data, resulting in training data; and
providing (46) the training data for training the machine learning model.

2. The method according to claim 1, wherein the data feed has been captured using a privacy preserving capturing device (3a).

3. The method according to claim 2, wherein the privacy preserving capturing device (3a) is a radar.

4. The method according to claim 2, wherein the privacy preserving capturing device (3a) is an infrared, IR, camera with a resolution that is low enough to not reveal a face of the person.

5. The method according to any one of the preceding claims, wherein the step of generating (42) fake video data comprises generating fake video data based on a generative adversarial network, GAN.

6. A training data provider (1) for providing training data for a machine learning model for monitoring a person based on video data, the training data provider (1) comprising:
a processor (60); and
a memory (64) storing instructions (67) that, when executed by the processor, cause the training data provider (1) to:
obtain a data feed of the person, wherein the data feed comprises a series of images that preserves a privacy of the person;
generate fake video data of a fictive person, such that a face of the fake video data is a computer-generated fictive face;
combine the data feed with the fake video data, resulting in training data; and
provide the training data for training the machine learning model.

7. The training data provider (1) according to claim 6, wherein the data feed has been captured using a privacy preserving capturing device (3a).

8. The training data provider (1) according to claim 7, wherein the privacy preserving capturing device (3a) is a radar.

9. The training data provider (1) according to claim 7, wherein the privacy preserving capturing device (3a) is an infrared, IR, camera with a resolution that is low enough to not reveal a face of the person.

10. The training data provider (1) according to any one of claims 6 to 9, wherein the step of generating (42) fake video data comprises generating fake video data based on a generative adversarial network, GAN.

11. A computer program (67, 91) for providing training data for a machine learning model for monitoring a person based on video data, the computer program comprising computer program code which, when executed on a training data provider (1) causes the training data provider (1) to:
obtain a data feed of the person, wherein the data feed comprises a series of images that preserves a privacy of the person;
generate fake video data of a fictive person, such that a face of the fake video data is a computer-generated fictive face ;
combine the data feed with the fake video data, resulting in training data; and
provide the training data for training the machine learning model.

12. A computer program product (64, 90) comprising a computer program according to claim 11 and a computer readable means on which the computer program is stored.

## Patentansprüche

1. Verfahren zum Bereitstellen von Trainingsdaten für ein Maschinenlernmodell zum Überwachen einer Person auf Grundlage von Videodaten, wobei das Verfahren von einem Trainingsdatenanbieter (1) durchgeführt wird, wobei das Verfahren umfasst:
Erhalten (40) einer Dateneinspeisung der Person, wobei die Dateneinspeisung eine Reihe von Bildern umfasst, die die Privatsphäre der Person bewahrt;
Erzeugen (42) von gefälschten Videodaten einer aktiven Person, so dass ein Gesicht der gefälschten Videodaten ein computergeneriertes aktives Gesicht ist;
Kombinieren (44) der Dateneinspeisung mit den gefälschten Videodaten, woraus Trainingsdaten resultieren; und
Bereitstellen (46) der Trainingsdaten für das Trainieren des Maschinenlernmodells.

2. Verfahren nach Anspruch 1, wobei die Dateneinspeisung unter Verwendung einer die Privatsphäre bewahrenden Erfassungsvorrichtung (3a) erfasst wurde.

3. Verfahren nach Anspruch 2, wobei die die Privatsphäre bewahrende Erfassungsvorrichtung (3a) ein Radar ist.

4. Verfahren nach Anspruch 2, wobei die die Privatsphäre bewahrende Erfassungsvorrichtung (3a) eine Infrarot-, IR-, Kamera mit einer Auflösung ist, die niedrig genug ist, um ein Gesicht der Person nicht zu enthüllen.

5. Verfahren nach einem der vorstehenden Ansprüche, wobei der Schritt des Erzeugens (42) von gefälschten Videodaten das Erzeugen von gefälschten Videodaten auf Grundlage eines generativen kontradiktorischen Netzwerks, GAN, umfasst.

6. Trainingsdatenanbieter (1) zum Bereitstellen von Trainingsdaten für ein Maschinenlernmodell zum Überwachen einer Person auf Grundlage von Videodaten, wobei der Trainingsdatenanbieter (1) umfasst:
einen Prozessor (60); und
einen Speicher (64), der Anweisungen (67) speichert, die, wenn sie vom Prozessor ausgeführt werden, den Trainingsdatenanbieter (1) veranlassen zum:
Erhalten einer Dateneinspeisung der Person, wobei die Dateneinspeisung eine Reihe von Bildern umfasst, die die Privatsphäre der Person bewahrt;
Erzeugen von gefälschten Videodaten einer aktiven Person, so dass ein Gesicht der gefälschten Videodaten ein computergeneriertes aktives Gesicht ist;
Kombinieren der Dateneinspeisung mit den gefälschten Videodaten, woraus Trainingsdaten resultieren; und
Bereitstellen der Trainingsdaten für das Trainieren des Maschinenlernmodells.

7. Trainingsdatenanbieter (1) nach Anspruch 6, wobei die Dateneinspeisung unter Verwendung einer die Privatsphäre bewahrenden Erfassungsvorrichtung (3a) erfasst wurde.

8. Trainingsdatenanbieter (1) nach Anspruch 7, wobei die die Privatsphäre bewahrende Erfassungsvorrichtung (3a) ein Radar ist.

9. Trainingsdatenanbieter (1) nach Anspruch 7, wobei die die Privatsphäre bewahrende Erfassungsvorrichtung (3a) eine Infrarot-, IR-, Kamera mit einer Auflösung ist, die niedrig genug ist, um ein Gesicht der Person nicht zu enthüllen.

10. Trainingsdatenanbieter (1) nach einem der Ansprüche 6 bis 9, wobei der Schritt des Erzeugens (42) gefälschter Videodaten das Erzeugen gefälschter Videodaten auf Grundlage eines generativen kontradiktorischen Netzwerks, GAN, umfasst.

11. Computerprogramm (67, 91) zum Bereitstellen von Trainingsdaten für ein Maschinenlernmodell zum Überwachen einer Person auf Grundlage von Videodaten, wobei das Computerprogramm einen Computerprogrammcode umfasst, der, wenn er auf einem Trainingsdatenanbieter (1) ausgeführt wird, den Trainingsdatenanbieter (1) veranlasst zum:
Erhalten einer Dateneinspeisung der Person, wobei die Dateneinspeisung eine Reihe von Bildern umfasst, die die Privatsphäre der Person bewahrt;
Erzeugen von gefälschten Videodaten einer aktiven Person, so dass ein Gesicht der gefälschten Videodaten ein computergeneriertes aktives Gesicht ist;
Kombinieren der Dateneinspeisung mit den gefälschten Videodaten, woraus Trainingsdaten resultieren; und
Bereitstellen der Trainingsdaten für das Trainieren des Maschinenlernmodells.

12. Computerprogrammprodukt (64, 90), das ein Computerprogramm nach Anspruch 11 und ein computerlesbares Mittel umfasst, auf dem das Computerprogramm gespeichert ist.

## Revendications

1. Procédé pour fournir des données de formation pour un modèle d'apprentissage automatique pour surveiller une personne sur la base de données vidéo, le procédé étant effectué par un fournisseur de données de formation (1), le procédé comprenant :
l'obtention (40) d'un flux de données de la personne, dans lequel le flux de données comprend une série d'images qui préserve la vie privée de la personne ;
la génération (42) de fausses données vidéo d'une personne active, de telle sorte qu'un visage des fausses données vidéo soit un visage actif généré par ordinateur ;
la combinaison (44) du flux de données avec les fausses données vidéo, conduisant à des données de formation ; et
la fourniture (46) des données de formation pour former le modèle d'apprentissage automatique.

2. Procédé selon la revendication 1, dans lequel le flux de données a été capturé en utilisant un dispositif de capture préservant la vie privée (3a).

3. Procédé selon la revendication 2, dans lequel le dispositif de capture préservant la vie privée (3a) est un radar.

4. Procédé selon la revendication 2, dans lequel le dispositif de capture préservant la vie privée (3a) est une caméra infrarouge, IR, avec une résolution qui est suffisamment faible pour ne pas révéler le visage de la personne.

5. Procédé selon l'une quelconque des revendications précédentes, dans lequel l'étape de génération (42) de fausses données vidéo comprend la génération de fausses données vidéo sur la base d'un réseau antagoniste génératif, GAN.

6. Fournisseur de données de formation (1) pour fournir des données de formation pour un modèle d'apprentissage automatique pour surveiller une personne sur la base de données vidéo, le fournisseur de données de formation (1) comprenant :
un processeur (60) ; et
une mémoire (64) stockant des instructions (67) qui, lorsqu'elles sont exécutées par le processeur, amènent le fournisseur de données de formation (1) à :
obtenir un flux de données de la personne, dans lequel le flux de données comprend une série d'images qui préserve la vie privée de la personne ;
générer des fausses données vidéo d'une personne active, de telle sorte qu'un visage des fausses données vidéo soit un visage actif généré par ordinateur ;
combiner le flux de données avec les fausses données vidéo, conduisant à des données de formation ; et
fournir les données de formation pour former le modèle d'apprentissage automatique.

7. Fournisseur de données de formation (1) selon la revendication 6, dans lequel le flux de données a été capturé en utilisant un dispositif de capture préservant la vie privée (3a).

8. Fournisseur de données de formation (1) selon la revendication 7, dans lequel le dispositif de capture préservant la vie privée (3a) est un radar.

9. Fournisseur de données de formation (1) selon la revendication 7, dans lequel le dispositif de capture préservant la vie privée (3a) est une caméra infrarouge, IR, avec une résolution qui est suffisamment faible pour ne pas révéler le visage de la personne.

10. Fournisseur de données de formation (1) selon l'une quelconque des revendications 6 à 9, dans lequel l'étape de génération (42) de fausses données vidéo comprend la génération de fausses données vidéo sur la base d'un réseau antagoniste génératif, GAN.

11. Programme informatique (67, 91) pour fournir des données de formation pour un modèle d'apprentissage automatique pour surveiller une personne sur la base de données vidéo, le programme informatique comprenant un code de programme informatique qui, lorsqu'il est exécuté sur un fournisseur de données de formation (1), amène le fournisseur de données de formation (1) à :
obtenir un flux de données de la personne, dans lequel le flux de données comprend une série d'images qui préserve la vie privée de la personne ;
générer des fausses données vidéo d'une personne active, de telle sorte qu'un visage des fausses données vidéo soit un visage actif généré par ordinateur ;
combiner le flux de données avec les fausses données vidéo, conduisant à des données de formation ; et
fournir les données de formation pour former le modèle d'apprentissage automatique.

12. Produit de programme informatique (64, 90) comprenant un programme informatique selon la revendication 11 et un support lisible par ordinateur sur lequel le programme informatique est stocké.
